# EUROPÄISCHE PATENTSCHRIFT

(11) **EP 2 664 412 B1**
(45) Veröffentlichungstag und Bekanntmachung des Hinweises auf die Patenterteilung: **07.03.2018**
(21) Anmeldenummer: 13167889.8
(22) Anmeldetag: 15.05.2013
(51) Int. Cl.: B23P 19/00, B23P 19/04, B25J 15/02, B25J 15/04, B25J 15/00, B23P 19/02

(54) **Montageeinrichtung und Montagezelle**
Assembly device and assembly cell
Dispositif de montage et cellule de montage

(30) Priorität: 18.05.2012 DE 202012101834 U
(43) Veröffentlichungstag der Anmeldung: 20.11.2013
(73) Patentinhaber: KUKA Systems GmbH, 86165 Augsburg (DE)
(72) Erfinder: Männich, Carsten, 86153 Augsburg (DE); Jakob, Marius, 86179 Augsburg (DE); Zunke, Richard Dr., 86150 Augsburg (DE); Prues, Sebastian, 86153 Augsburg (DE)
(74) Vertreter: Ernicke, Klaus Stefan

(56) Entgegenhaltungen:
- EP-A1- 1 493 529
- EP-A2- 1 695 790
- EP-A2- 2 392 435
- DD-A1- 226 826
- DE-A1- 3 816 593
- DE-A1-102008 027 166
- DE-A1-102008 032 322
- DE-A1-102009 016 309
- DE-A1-102009 039 104
- DE-A1-102010 032 878

## Beschreibung

Die Erfindung betrifft eine Montageeinrichtung und eine Montagezelle mit den Merkmalen im Oberbegriff der Hauptansprüche. Eine solche Montageeinrichtung und eine solche Montagezelle sind aus der DE 10 2008 032322 A1 bekannt.

In der Praxis ist es bekannt, Wälzlager, Sicherungsringe und Dichtringe von Hand oder mit speziell angepassten Vorrichtungen an Werkstücke, z.B. Wellen, Hülsen oder dgl. zu montieren und zu fügen. In anderen Bereichen der Montagetechnik werden auch positionsgesteuerte Roboter für Zuführaufgaben eingesetzt.

Es ist Aufgabe der vorliegenden Erfindung, eine verbesserte Montagetechnik aufzuzeigen.

Die Erfindung löst diese Aufgabe mit den Merkmalen im Hauptanspruch.
Die beanspruchte Montageeinrichtung kann in ihrer Grundausprägung für unterschiedliche zu montierende Teile, insbesondere für Wälzlager, Dichtringe und Sicherungsringe eingesetzt werden. Die jeweiligen adaptierten Montageeinrichtungen können eigenständig sein oder können miteinander kombiniert sein. Sie können auch Bestandteil einer Montagezelle sein. Die Montagezelle ist dann in der Lage, mehrere Montagevorgänge an unterschiedlichen Werkstücken auszuführen und insbesondere komplexere Montagevorgänge zu erledigen. Hierbei können auch Gruppen von Werkstücken, die z.B. zu einer größeren Baueinheit gehören, montiert werden.

Der Einsatz eines taktilen Roboters ist bei den Montageeinrichtungen von besonderem Vorteil. Mit seinem steuerbaren Greifwerkzeug kann er sowohl die zu montierenden Teile, als auch Werkzeuge handhaben und führen. Erfindungsgemäß weisen die Montageeinrichtungen eine steuerbare und angetriebene Hilfseinrichtung auf, die mit dem taktilen Roboter zusammenwirkt und die z.B. als Presse oder als Spanneinrichtung hohe Kräfte aufbringen kann, welche den Roboter unterstützen. Der Roboter braucht dann nicht für diese hohen Kraftniveaus ausgelegt zu sein.

Der taktile Roboter ist mit seinem steuerbaren Greifwerkzeug multifunktional. Insbesondere kann ein einzelnes Greifwerkzeug für unterschiedliche Montagejobs und zum Greifen unterschiedlicher Teile ausgebildet sein. Darüber hinaus kann ein Greifwerkzeug als Ganzes oder in Teilen, insbesondere mit seinen Greiffingern, wechselbar sein.

Ein taktiler Roboter hat für die beanspruchte Montagetechnik besondere Vorteile. Durch seine belastungsaufnehmende Sensorik kann er einerseits definierte Kräfte und Momente aufbringen und kann andererseits die Sensorik zu Such- und Positionierzwecken, zur Unfallvermeidung, zur Führung von anderweitig angetriebenen Werkzeugen und zur Prozessüberwachung einsetzen. Durch die vielfachen Nutzungsmöglichkeiten der ohnehin beim taktilen Roboter bereits vorhandenen Sensorik kann auf zusätzliche Überwachungseinrichtungen mit Sensoren, Steuerungen etc. in vielen Fällen verzichtet werden. Ferner ist es möglich, Prüfvorrichtungen zu vereinfachen. Durch den gemeinsamen Anschluss von ein oder mehreren taktilen Robotern und ein oder mehreren Hilfseinrichtungen an eine gemeinsame Steuerung, insbesondere an eine Robotersteuerung, kann auch die Steuer- und Regeltechnik vereinfacht und verbessert werden. Dies wirkt sich auch günstig auf ein verbessertes und schnelleres Steuer- und Regelverhalten aus.

Die beanspruchten Montageeinrichtungen und die Montagezelle können vollautomatisch arbeiten. Durch den Einsatz von ein oder mehreren taktilen Robotern kann der Bau- und Steueraufwand sowie der Platzbedarf verringert werden. Außerdem ergibt sich eine besonders hohe Flexibilität mit schneller Anpassbarkeit an andere Werkstücke und zu montierende Teile. Die einzelnen oder mehrfachen Montageprozesse können sehr schnell sowie mit hoher Präzision und Sicherheit durchgeführt werden. Der trotz der Werkstück- und Prozesskomplexität hohe Automatisierungsgrad und die dank taktiler Roboter erzielbare hohe Verfügbarkeit sind besonders vorteilhaft. Eine Qualitätsüberwachung mit Protokollierung kann eingebunden werden. Die beanspruchte Montagetechnik zeichnet sich ferner durch besonders hohe Effizienz und Wirtschaftlichkeit aus.

Die Montagetechnik ist besonders zur automatisierten Fertigung von Robotern und Roboterteilen von Vorteil. Sie eignet sich insbesondere für Teile, speziell Getriebeteile, einer Roboterhand.

In einer Ausführungsform weist ein Greifwerkzeug einen zusätzlichen Mitnehmer, insbesondere einen Vereinzelungsstift, für Lager und/oder für Sicherungsringe auf. Ein Greifwerkzeug weist in einer Variante mehrere relativ zueinander gesteuert bewegliche Greiffinger mit einem Greifmittel, insbesondere einem Aufnahmepin, für einen Sicherungsring auf.

Ferner ist es günstig, wenn ein Magazin für Lager oder für Sicherungsringe ein Detektionsmittel, insbesondere einen Anschlag am Ausgabemittel, für die Verifizierung eines bereit gestellten Lagers oder eines Sicherungsrings aufweist. Vorteilhaft ist die Ausbildung eines Ausgabemittels eines Magazins als Führungsbahn für ein Lager oder einen Sicherungsring, wobei die Führungsbahn einen bodenseitigen Schlitz für den Durchgriff des Mitnehmers aufweist. Ferner können die Magazine für Lager und Sicherungsringe Handhabungsmittel zum automatischen Austausch und zur Aktivierung aufweisen.

Eine Montageeinrichtung für Dichtringen besitzt vorteilhafterweise eine Prüfeinrichtung für das Werkstück mit dem gefügten Dichtring. Die Prüfung von montierten Lagern und/oder Sicherungsringen kann von einem Roboter der Montageeinrichtung oder von einer separaten Prüfeinrichtung durchgeführt werden.

Die verschiedenen Montageeinrichtungen für Lager, Sicherungsringe und Dichtringe können jeweils einen taktilen Roboter mit einem ggf. multifunktionalen Greifwerkzeug aufweisen, das zur Handhabung eines Werkstücks und/oder des Lagers bzw. Sicherungsrings bzw. Dichtrings und ggf. eines Magazins ausgebildet ist. Die betreffenden Greifwerkzeuge können jeweils als Parallelgreifer mit zwei oder mehr parallelen und vorzugsweise wechselbaren Greiffingern ausgebildet sein. Die betreffenden Greifwerkzeuge können auch einen steuerbaren Antrieb zur gegenseitigen Relativbewegung ihrer Greiffinger haben. Für derartige Greifwerkzeuge ist die Ausbildung mit einem Basisteil mit steuerbar angetriebenen Adaptern und einer Kupplungseinrichtung sowie einer steuerbarren Verriegelung zur wechselbaren Aufnahme von Greiffingern von Vorteil. Die verschiedenen Montageeinrichtungen können auch jeweils eine adaptierte angetriebene Hilfseinrichtung besitzen, wobei die jeweilige Hilfseinrichtung und der taktile Roboter mit einer gemeinsamen Steuerung , insbesondere einer Robotersteuerung, verbunden sind.

Ein Roboter kann eine automatische Wechselkupplung zum Werkzeugtausch besitzen. Bei einem taktilen Roboter mit integrierter Sensorik ist es vorteilhaft, einen Sensor, insbesondere einen Momentensensor, an einer oder an mehreren Roboterachsen (I - VII) anzuordnen. Ein taktiler Roboter kann mindestens eine nachgiebige Roboterachse (I - VII) mit einer Nachgiebigkeitsregelung, insbesondere einer reinen Kraftregelung oder einer Kombination aus Positions- und Kraftregelung, aufweisen.

Ein solcher taktiler Roboter kann auch bei einer einzelnen Montageeinrichtung für Lager oder auch einer einzelnen Montageeinrichtung für Spannringe oder Dichtringe eingesetzt werden. Dabei können auch kooperierende Roboter zum Einsatz kommen.

Bei einer einzelnen Montageeinrichtung sind vorteilhafterweise der oder die taktile(n) Roboter und die Hilfseinrichtung mit einer gemeinsamen Steuerung, insbesondere einer Robotersteuerung, verbunden. Bei einer Kombination mehrerer Montageeinrichtungen können mehrere Hilfseinrichtungen und der oder die taktile(n) Roboter mit der gemeinsamen Steuerung, insbesondere einer Robotersteuerung, verbunden sein.

Eine Montagezelle besitzt vorteilhafterweise eine Zuführ- und Abführeinrichtung für Werkstücke und/oder Werkstückträger. Sie kann ferner eine Basis, insbesondere einen Tisch, aufweisen, auf welcher der oder die taktilen Roboter und die Hilfseinrichtungen angeordnet sind. Die Magazine für Lager und Sicherungsringe sind günstigerweise im Arbeitsraum zumindest eines taktilen Roboters angeordnet.

In den Unteransprüchen sind weitere vorteilhaften Ausgestaltungen der Erfindung angegeben.

Die Erfindung ist in den Zeichnungen beispielhaft und schematisch dargestellt. Im Einzelnen zeigen:
- Figur 1:: eine perspektivische Ansicht einer Montagezelle mit mehreren Montageeinrichtungen,
- Figur 2:: eine perspektivische Ansicht eines Bauteilträgers,
- Figur 3:: eine ausschnittsweise und vergrößerte perspektivische Ansicht von Teilen der Montagezelle,
- Figur 4 und 5:: eine Presse und ein Presswerkzeug,
- Figur 6 und 7:: ein Magazin für Wälzlager in verschiedenen Ansichten,
- Figur 8:: einen taktilen Roboter mit einem steuerbaren Greifwerkzeug und einer Wechseleinrichtung,
- Figur 9:: eine perspektivische Ansicht eines Halters für Greiffinger,
- Figur 10 bis 12:: ein Greifwerkzeug mit verschiedenen Greiffingern und unterschiedlich gegriffenen Teilen,
- Figur 13:: eine perspektivische Ansicht eines Greifwerkzeugs mit einem Mitnehmer und Aufnahmepins mit besonderer Eignung für Spannringe,
- Figur 14:: ein Magazin für Spannringe mit einer Abgabeeinrichtung,
- Figur 15:: eine teilweise geschnittene Ansicht des Magazins von Figur 14 mit einem Greifwerkzeug,
- Figur 16:: eine perspektivische Ansicht des Magazins mit einem Greifwerkzeug,

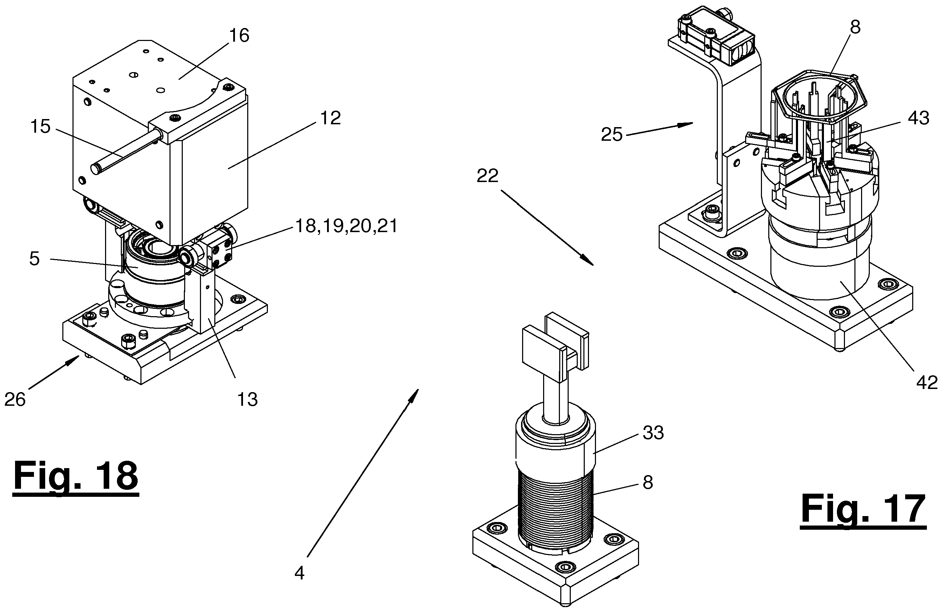

- Figur 17:: eine Hilfseinrichtung zum Setzen von Dichtringen und
- Figur 18:: eine Prüfeinrichtung.

Die Erfindung betrifft eine Montageeinrichtung (2,3,4) und ein Montageverfahren. Die Montageeinrichtung (2,3,4) kann verschiedene Ausprägungen haben. Die Erfindung betrifft ferner eine Montagezelle (1) mit mehreren Montageeinrichtungen (2,3,4) für die Durchführung mehrfacher und komplexer Montagevorgänge.

Die Montageeinrichtungen (2,3,4) sind zur Montage von ein oder mehreren Teilen (6,7,8) an einem Werkstück (5) vorgesehen und ausgebildet. Die Montageeinrichtung (2) dient zur Montage von Lagern (6), insbesondere Wälzlagern an wellen- oder hülsen- bzw. flanschartigen Werkstücken (5). Die Montageeinrichtung (3) ist zur Montage von Sicherungsringen (7) vorgesehen und ausgebildet. Die Montageeinrichtung (4) befasst sich mit der Montage von Dichtringen (8).

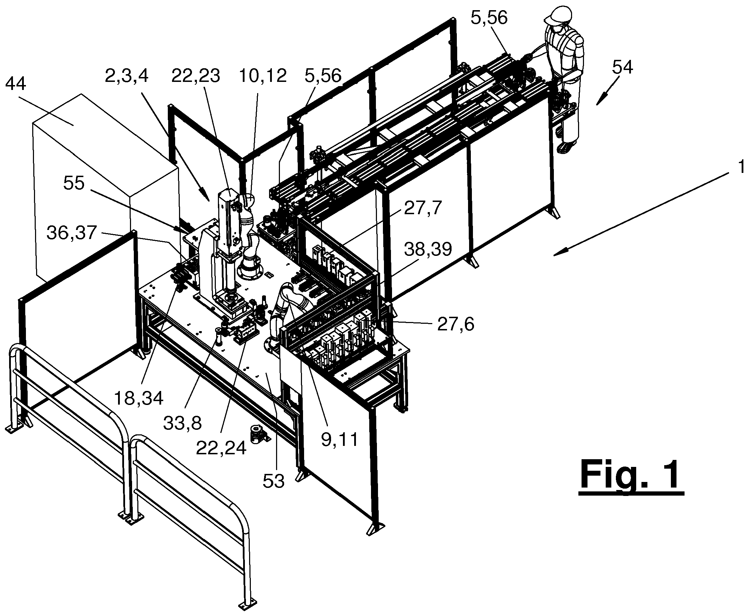

Die Montageeinrichtungen (2,3,4) können eigenständig ausgebildet und angeordnet sein, wobei sie jeweils nur den einen vorgenannten Montagevorgang ausführen. Die Montageeinrichtungen (2,3,4) können alternativ komplexer aufgebaut sein und können mehrere Montagejobs ausführen. Sie können insbesondere an einem einzelnen Werkstück (5) mehrere Teile, z.B. ein Wälzlager (6) und einen Sicherungsring (7), montieren. Die Montageeinrichtungen (2,3,4) können dabei zusammenwirken oder miteinander kombiniert sein. Sie können insbesondere gemeinsame Komponenten aufweisen. In der gezeigten Ausführungsform von Figur 1 sind drei Montageeinrichtungen (2,3,4) für die Montage von Wälzlagern (6), Sicherungsringen (7) und Dichtringen (8) zusammengefasst. Sie haben dabei gemeinsame Komponenten, insbesondere einen taktilen Roboter (9,10) mit einem steuerbaren Greifwerkzeug (11,12).

Die Montagezelle (1) weist eine Zuführeinrichtung (54) für ein oder mehrere Werkstücke (5) und eine Abführeinrichtung (55) für Werkstücke (5) mit montierten Teilen, insbesondere Lagern (6), Sicherungsringen (7) und Dichtringen (8), auf. Die Werkstücke (5) können einzeln zugeführt werden. In der gezeigten Ausführungsform erfolgt die Zuführung einer Gruppe von Werkstücken (5), die auf einem geeigneten Werkstückträger (56) mit entsprechenden Halterungen gemeinsam in definierter Lage angeordnet sind. Die Abfuhr erfolgt ebenfalls mit dem Werkstückträger (56). Die Zuführeinrichtung (54), die z.B. als Palettenrutsche ausgebildet ist, positioniert den beladenen Werkstückträger (56) oder alternativ ein einzelnes Werkstück an einer vorgegebenen Entnahmeposition und transportiert den leeren Werkstückträger (56) für eine manuelle oder automatische Neubestückung zu einer Beladestelle zurück. Alternativ kann die Palettenrutsche auch die Abführeinrichtung (55) bilden und den mit montierten Teilen wieder beladenen Werkstückträger (56) zurück transportieren.

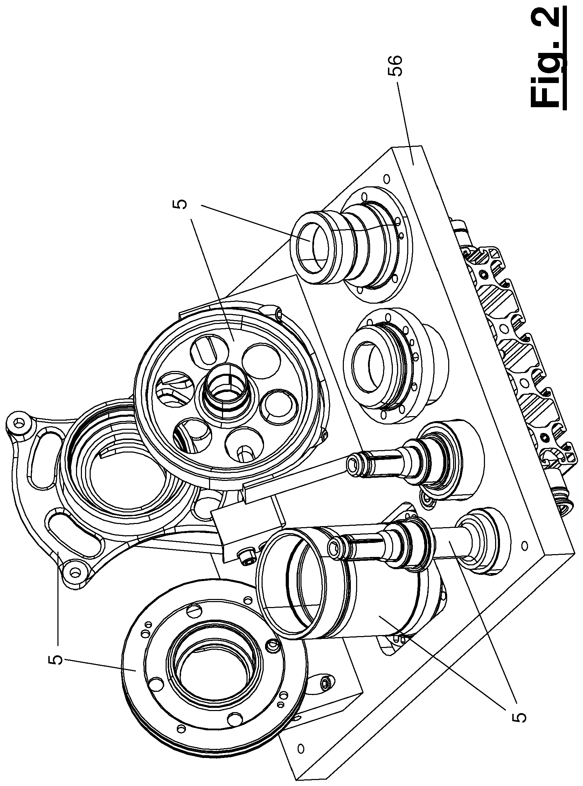

Figur 2 zeigt einen solchen palettenartigen Werkstückträger mit mehreren Werkstücken (5), die z.B. als Ritzelwellen, Hülsen, Zahnräder, Deckel, Flansche oder dgl. ausgebildet sein können. In der gezeigten Ausführungsform bilden die Werkstücke (5) Bestandteile, insbesondere Getriebeteile, einer mehrachsigen Roboterhand.

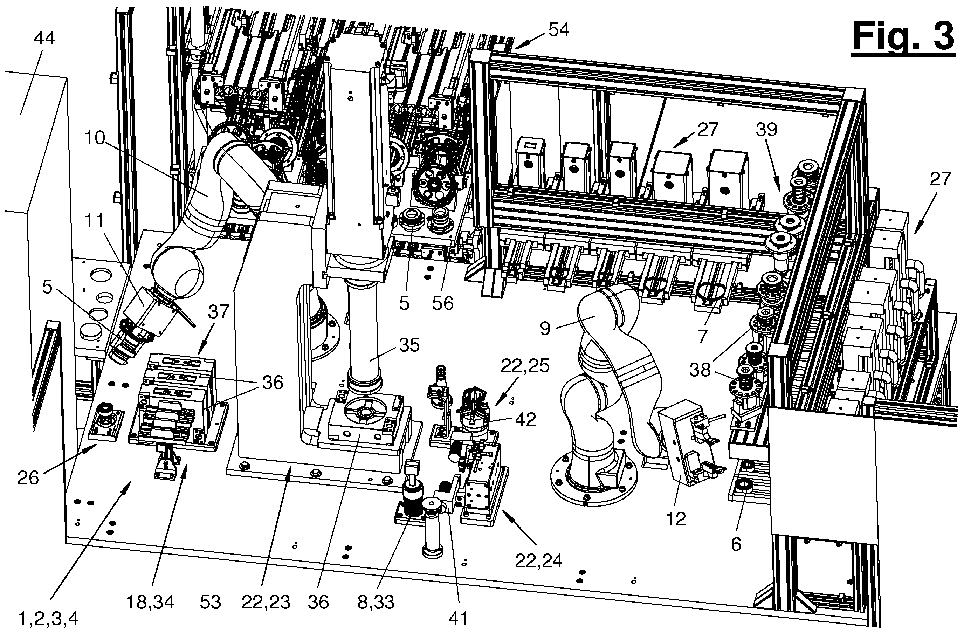

Wie Figur 1 und 3 verdeutlichen, weist die Montagezelle (1) eine z.B. als Tisch ausgebildete Basis (53) zur Aufnahme der Montageeinrichtungen (2,3,4) auf. Die Zu- und Abführeinrichtungen (54,55) schließen an die Basis (53) an. Auf dem inneren oder mittleren Bereich der Basis (53) sind die beweglichen und mit Antrieb sowie Steuerung versehenen Komponenten der Montageeinrichtungen (2,3,4) angeordnet. Am Rand der Basis (53) können Anbauten mit Magazinen (27,39), z.B. für Lager (6), Sicherungsringe (7) und Werkzeuge (38), angeordnet sein. Neben oder an der Basis (53) befindet sich auch eine Steuerung (44), vorzugsweise eine Robotersteuerung.

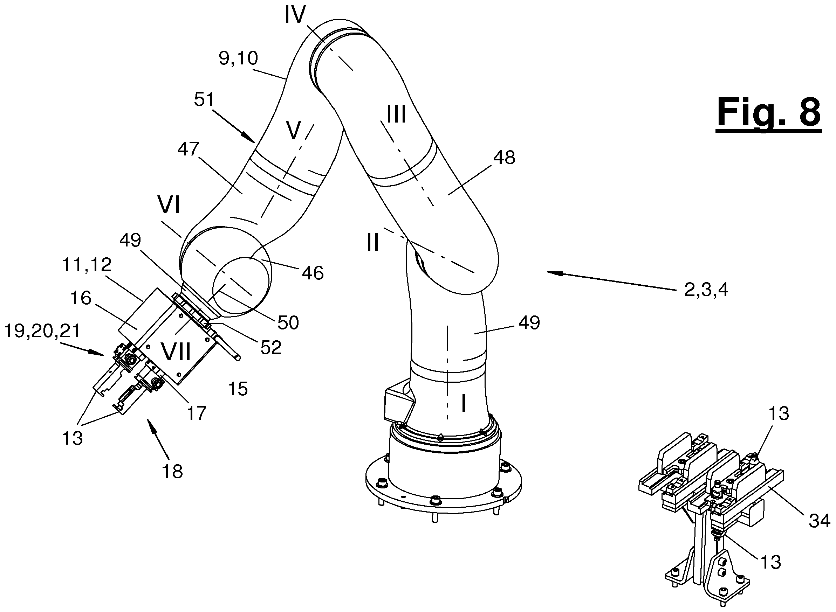

Die Montageeinrichtungen (2,3,4) weisen jeweils mindestens einen taktilen Roboter (9,10) auf. In der gezeigten Montagezelle (1) sind zwei taktile Roboter (9,10) vorhanden, die an eine gemeinsame oder übergeordnete Steuerung (44) angeschlossen sein können und die miteinander kooperieren. Die taktilen Roboter (9,10) tragen jeweils ein steuerbares und mit einem Antrieb (nicht dargestellt) versehenes Greifwerkzeug (11,12), welches ebenfalls an die Steuerung (44) angeschlossen ist. Figur 8 zeigt beispielhaft einen solchen taktilen Roboter (8,9) .

Außerdem können die Montageeinrichtungen (2,3,4) jeweils ein oder mehrere Hilfseinrichtungen (22) aufweisen, die ggf. mit einem steuerbaren Antrieb ausgerüstet sind und ebenfalls an die Steuerung (44) angeschlossen sind. Die Roboter (9,10) sind programmierbar, wobei in der Steuerung (44) ein Bahnprogramm und ein Ablaufprogramm gespeichert seind.

Die taktilen Roboter (9,10) arbeiten im gezeigten Ausführungsbeispiel zusammen und haben aufgeteilte Tätigkeiten. Der eine Roboter (10) ist v.a. mit dem Zuführen und Abführen von Werkstücken (5) und mit dem Wechseln von Teilen einer Hilfseinrichtung (22) zur Adaption an unterschiedliche Montagejobs sowie ggf. auch mit Prüfaufgaben beschäftigt. Der andere taktile Roboter (9) ist vorzugsweise mit der Aufnahme und Zuführung der zu montierenden Teile (6,7,8) befasst. Die Roboter (9,10) können auch einander Werkstücke (5) übergeben, um deren Orientierung zu ändern bzw. die Werkstücke (5) zu wenden und zurückzugeben. Der zweite taktile Roboter (9) kann dabei auch Zuführaufgaben haben. Der eine taktile Roboter (10) ist z.B. an einer Randzone der Basis (53) angeordnet und bedient die in seinem Arbeitsbereich befindlichen Zuführ- und Abführeinrichtungen (54,55). Der andere taktile Roboter (9) ist distanziert angeordnet und bedient die in seinem Arbeitsbereich angeordneten Magazine (27) für Lager (6) und Sicherungsringe (7) sowie ein Magazin (33) für Dichtringe (8).

Der in Figur 8 gezeigte taktile Roboter (9,10) hat mehrere beweglich, z.B. gelenkig, miteinander verbundene Glieder (46,47,48,49) und mehrere Roboterachsen (I bis VII), deren Achsantriebe mit der Steuerung (44) verbunden sind. Der Roboter (9,10) besitzt für die taktile Eigenschaft eine zugeordnete, vorzugsweise integrierte Sensorik (51), die Belastungen und ggf. auch Wege und Positionen aufnimmt. Die Sensorik (51) beinhaltet in der bevorzugten Ausführungsform mehrere Sensoren, die an den Achsantrieben und den Verbindungsstellen der Glieder (46 - 49) angeordnet sind. Die Sensorik (51) bzw. die Sensoren sind ebenfalls mit der Steuerung (44) verbunden.

Wenn in einer Montageeinrichtung (2,3,4) oder einer Montagezelle (1) zwei oder mehr taktile Roboter (9,10) eingesetzt werden, haben diese vorzugsweise eine gleichartige, nachfolgend beschriebene Ausbildung. Die Greifwerkzeuge (11,12) können ebenfalls gleichartig ausgebildet sein.

In den gezeigten Ausführungsformen hat der taktile Roboter (9,10) rotatorische Achsen und ist als Gelenkarmroboter ausgebildet, wobei er z.B. sieben Roboterachsen (I - VII) aufweist. Am Abtriebselement (45) seines Endglieds (46), welches auch als Roboterhand bezeichnet wird, ist ein Greifwerkzeug (11,12) starr oder über eine zwischengeschaltete automatische Wechselkupplung (52) austauschbar befestigt. Das z.B. flanschförmige Abtriebselement (45) dreht um eine Abtriebs- oder Drehachse (50), die auch die letzte Roboterachse (VII) bildet.

Weitere Einzelheiten der Roboterausbildung sind am Ende der Beschreibung erläutert.

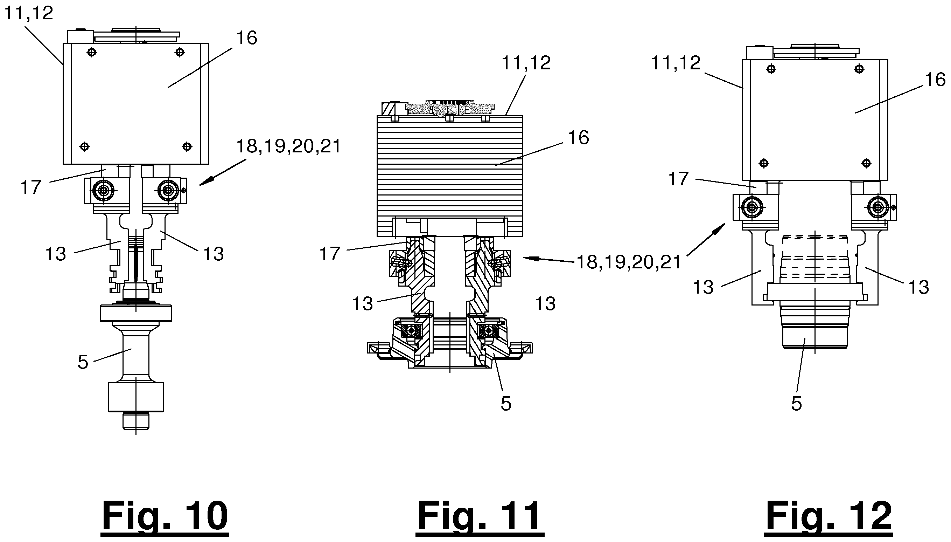

Das oder die Greifwerkzeug(e) (11,12) sind z.B als Parallelgreifer ausgebildet und besitzen zwei oder mehr Greiffinger (13), die bevorzugt parallel ausgerichtet sind und eine an den jeweiligen Greifjob angepasste Greiferkontur aufweisen. Die Greiffinger (13) haben eine längliche Form und können an der Innenseite und/oder Außenseite eine Greiferkontur mit Vorsprüngen und Vertiefungen aufweisen. Die Greiferkontur kann an ein einzelnes zu greifendes Teil, z.B. ein Werkstück (5) oder eines der zu montierenden Teile (6,7,8) oder auch ein Teil einer Hilfseinrichtung (22), angepasst sein. Vorzugsweise haben die Greiffinger (13) eine Mehrfachkontur und sind in der Lage, mehrere unterschiedliche Teile zu greifen. Figur 10 bis 12 zeigen hierzu Ausführungsbeispiele.

Die Greiffinger (13) sind relativ zueinander beweglich gelagert und mit einem Antrieb (nicht dargestellt) verbunden. Sie können zum Öffnen und Schließen des Greifwerkzeugs (11,12) einander angenähert und voneinander entfernt werden. Die Greiffinger (13) sind an einem Basisteil (16) des Greifwerkzeugs (11,12) angeordnet, welches auch den Antrieb aufnimmt und über einen Anschluss mit dem taktilen Roboter (9,10) oder mit einer Wechselkupplung (52) verbunden ist. Die Greiffinger (13) können direkt am Basisteil (16) oder jeweils an einem abstehenden Adapter (17) angeordnet sein, der am Basisteil (16) beweglich gelagert und ggf. angetrieben ist.

Für unterschiedliche Greifjobs können die Greifwerkzeuge (11,12) wechselbar sein, wofür die Montageeinrichtung(en) (2,3,4) bzw. die Montagezelle (1) eine Wechseleinrichtung (18) aufweist. Für den Greiferwechsel gibt es unterschiedliche Möglichkeiten.

In der einen Variante hat ein Greifwerkzeug (11,12) fest zugeordnete Greiffinger (13) und wird bei Bedarf als Ganzes mittels der automatischen Wechselkupplung (52) ausgetauscht. Die Wechseleinrichtung (18) weist hierfür mehrere unterschiedliche Greifwerkzeuge (11,12) auf, welche die besagten Greifwerkzeuge in einer definierten Position und Ausrichtung zum automatischen An- und Abkuppeln halten.

In der gezeigten Ausführungsform sind die Greiffinger (13) lösbar am Basisteil (16) und insbesondere an dem jeweiligen Adapter (17) angeordnet und können gewechselt werden. Hierfür ist jeweils eine Kupplungseinrichtung (19) und eine Verriegelung (20) sowie eine Betätigungseinrichtung (21) zum Öffnen und Schließen der Verriegelung (20) vorhanden. Die Zustellbewegung zum Anund Abkuppeln wird vom jeweiligen taktilen Roboter (9,10) ausgeführt. Die Wechseleinrichtung (18) weist mehrere Halter (34) für unterschiedliche Greiffinger (13), insbesondere unterschiedliche Gruppen von Greiffingern (13) auf. Der jeweilige Halter (34) nimmt die Einzelfinger oder die Fingergruppe in definierter Position und Ausrichtung nebst Lagesicherung zum automatischen An- und Abkuppeln auf.

In den gezeigten Ausführungsbeispielen sind die Parallelgreifer mit einem Paar bzw. einer Gruppe von zwei Greiffingern (13) ausgerüstet. In anderen Varianten kann die Gruppe größer sein und drei oder mehr parallele Greiffinger umfassen. Die Greiffinger (13) können ggf. auch in sich beweglich sein und eigene integrierte Antriebe aufweisen, wobei z.B. ein solcher komplexer Greiffinger einzeln an einem Basisteil (16) fest oder wechselbar angeordnet ist. Die vorgenannten Gruppen von Greiffingern oder auch komplexe Einzelfinger sind an unterschiedliche Greifjobs adaptiert und haben z.B. unterschiedliche Greifkonturen.

Die Greiffinger (13) mit den Kupplungseinrichtungen (19) und Verriegelungen (20) sowie Betätigungseinrichtungen (21) und die zugehörigen Halter (34) können in unterschiedlicher Weise ausgebildet sein. In dem in Figur 10 bis 12 gezeigten und bevorzugten Ausführungsbeispiel weisen die Kupplungseinrichtungen (19) Kupplungszapfen am Greiffinger (13) und eine zugehörige passende Aufnahmeöffnung am Adapter (17) sowie weitere lagebestimmende Kupplungselemente in Form von Anlagekanten, Drehsicherungen etc. auf. Die Kupplungsachse erstreckt sich hierbei z.B. in Längsrichtung der Greiffinger (13). Die Verriegelung (20) wird von einer umfangseitigen und tangentialen Riegelnut am Kupplungszapfen und von einer quer durch den Adapter (17) gesteckten Riegelstange gebildet, wobei die Riegelstange in einer Schlitzführung im Adapter (17) mit vorzugsweise Schrägausrichtung zur Kupplungsachse und Belastung durch ein Federelement beweglich geführt ist. Die Riegelstange kann vorgeschoben und mit der Riegelnut am eingesteckten Kupplungszapfen in formschlüssigen Eingriff gebracht werden, wobei die Riegelstange und die Riegelnut einen rotationssymmetrischen, insbesondere kreisrunden Querschnitt aufweisen. An den beidseits über den Adapter (17) nach außen vorstehenden Enden der Riegelstange sind drehbare Rollen oder Gleitelemente angeordnet, die mit kulissenartigen Anschlägen an den Haltern (34) zusammenwirken und Bestandteil der Betätigungseinrichtung (20) sind.

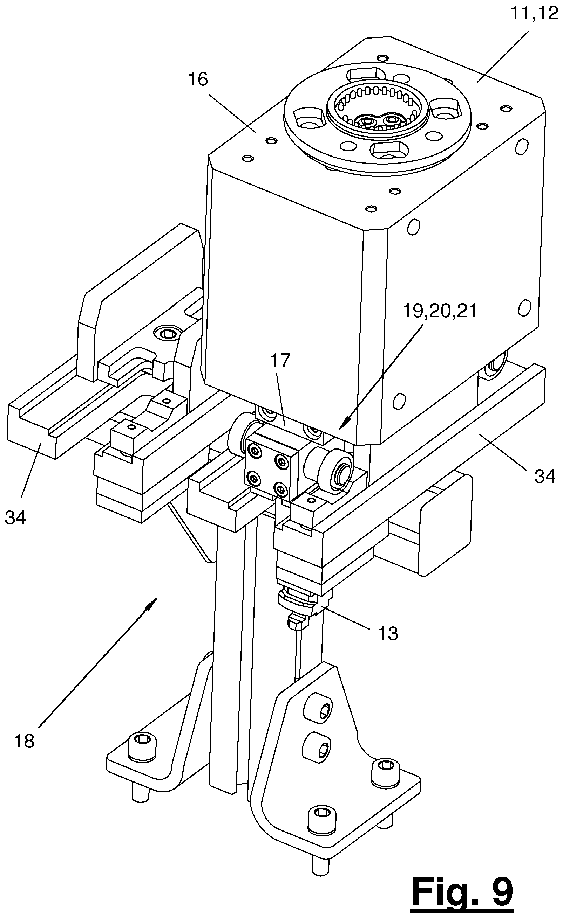

Figur 8 und 9 zeigen einen solchen Halter (34). Wenn der Antrieb im Greifwerkzeug (11,12) die Greiffinger (13) aufeinander zubewegt, werden die Rollen- oder Gleitelemente am Anschlag zurückgehalten und dadurch die Riegelstangen zum Öffnen der Verriegelung (20) nach außen bewegt und in Öffnungsstellung beim Abkuppeln gehalten. Die Greiffinger (13) sind am z.B. geschlitzten Halter (34) formschlüssig geführt und gehalten und werden in ihrer Lage durch eine federnde Sicherung gesichert.

Alternativ können die Greiffinger (13), die Wechseleinrichtung (18) sowie die Kupplungseinrichtung (19), Verriegelung (20) und Betätigungseinrichtung (21) anders ausgebildet sein, z.B. gemäß der DD 226 826 A1 oder der DE 10 2009 039 104 A1. Außerdem ist es in einer nicht dargestellten Variante der Verriegelung (20) möglich, einen federbelasteten Riegelstift in einem Adapter (17) durch Magnetkraft, z.B. von einem am Halter (34) angeordneten Dauermagneten oder Elektromagneten zu betätigen und aus einer Riegelstellung mit formschlüssigem Eingriff in einer Riegelbohrung am Greiffinger (13) herauszuziehen und dadurch die Verriegelung zu öffnen. Bei Abfall der Magnetkraft durch Abschalten eines Elektromagneten oder Distanzieren von einem Dauermagneten wird die Verriegelung durch die Bolzenfeder automatisch wieder geschlossen.

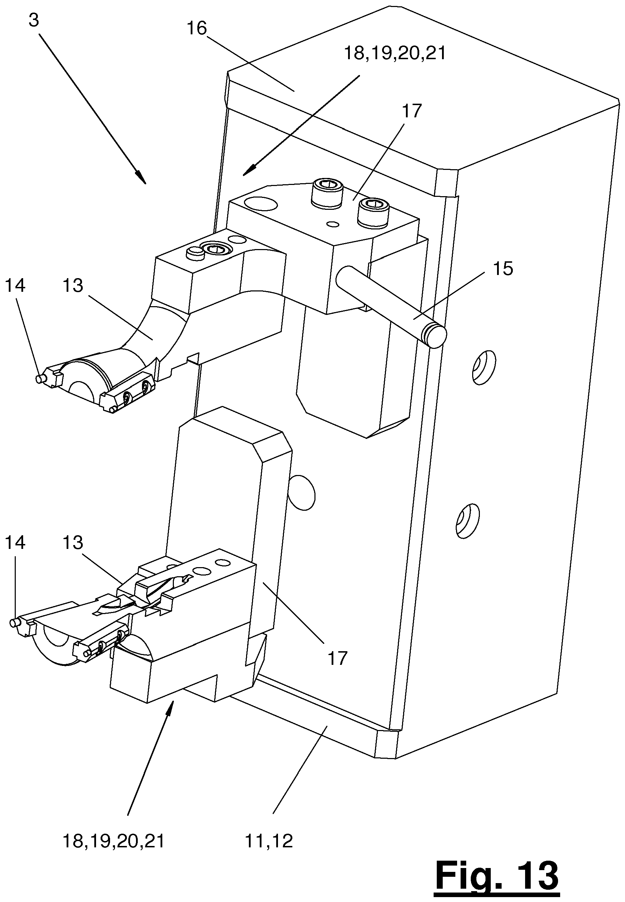

Ein Greifwerkzeug (11,12) kann in den gezeigten Ausführungsbeispielen außerdem weitere Teile für Zusatzaufgaben haben. Wie Figur 13 verdeutlicht, kann dies z.B. ein Mitnehmer (15) sein, der am Basisteil (16) z.B. starr angeordnet ist. Der z.B. stiftartige Mitnehmer (15) kann eine definierte Form, Position und Ausrichtung haben und am freien Ende ggf. eine hakenartige oder nutenartige Greifnase aufweist und als Vereinzelungsstift zu den nachfolgend erläuterten Zwecken dienen.

Ein oder mehrere Greiffinger (13) können außerdem eine besondere Greifkontur mit einer greifgünstigen Formgebung in einer ggf. mehrachsigen Ausrichtung aufweisen. Einerseits kann in der vorerwähnten Weise der Umfang eines Greiffingers (13), insbesondere in dessen Relativbewegungsrichtung gesehen, an der Innenseite und/oder Außenseite greifgerecht, z.B. mit Vorsprüngen und Vertiefungen sowie ggf. Durchgangsöffnungen, konturiert sein. Figur 13 verdeutlicht außerdem die ggf. zusätzliche Anordnung eines Greifmittels (14) an der Stirnseite eines Greiffingers (13). Das Greifmittel (14) kann z.B. als axial vorstehender Aufnahmepin ausgebildet sein, der an das Auge eines Sicherungsrings (7) angepasst ist und mit diesem in Eingriff tritt.

Figur 1, 3 und 4 bis 7 zeigen Teile einer Montageeinrichtung (2) für Lager (6), insbesondere Wälzlager. Der taktile Roboter (10) dient der Zuführung von Werkstücken (5) aus dem Werkstückträger (56) und kann auch zum Wechseln von Teilen der Hilfseinrichtung (22) benutzt werden. Er weist hierfür eine Greifwerkzeug (12) auf.

Der taktile Roboter (9) mit seinem Greifwerkzeug (11) dient zum Vereinzeln, Zuführen und Positionieren von Lagern (6) und kann auch zum Führen einer Komponente der Hilfseinrichtung (22) verwendet werden. Zur Montageeinrichtung (2) gehört ferner mindestens ein Magazin (27) für Lager (6), welches am Rand der Basis (16) bzw. der Arbeitsfläche angeordnet ist.

Die steuerbare und angetriebene Hilfseinrichtung (22) dient zum Fügen eines vom taktilen Roboter (9) zugeführten Lagers (6) an einem bereit gestellten Werkstück (5). Die Hilfseinrichtung (22) weist hierfür eine steuerbare Presse (23), vorzugsweise eine adaptionsfähige Universalpresse, auf. Die Presse (23) kann aus einem Gestell und einem mit der Steuerung (44) verbundenen Pressenantrieb sowie einem hiervon angetriebenen Pressmittel (35), z.B. einem vertikal auf- und abbewegten Pressstempel, bestehen. Außerdem weist die Presse (23) eine Pressenaufnahme (36) auf, die am Gestell unter dem Pressstempel (35) angeordnet ist. Die Pressenaufnahme (36) kann wechselbar ausgebildet und mehrfach vorhanden sein, wobei mehrere unterschiedliche Pressenaufnahmen (36) in einem Magazin (37) im Bereich des taktilen Roboters (10) angeordnet sind und mit dessen Greifwerkzeug (12) gehandhabt und an der Presse (23) bzw. im Magazin (37) positioniert werden können. Die Pressenaufnahmen (36) sind in der gezeigten Ausführungsform an unterschiedliche Werkstücke (5) adaptiert.

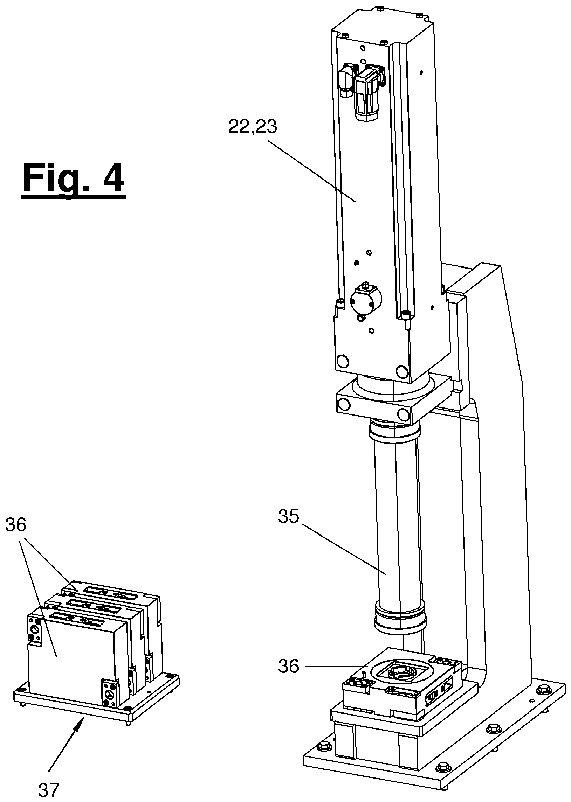

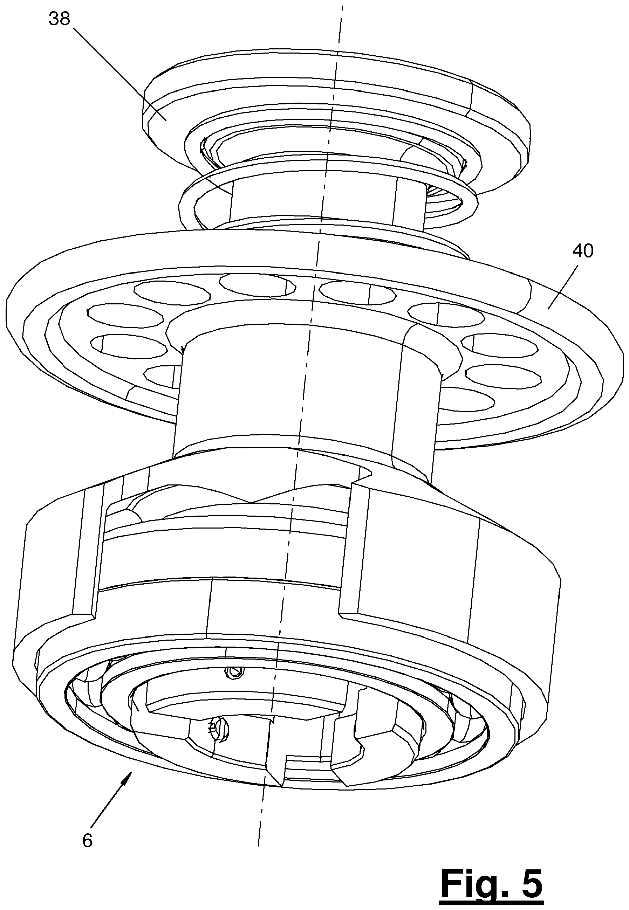

Die Presse (23) weist ferner ein mobiles und ggf. austauschbares Presswerkzeug (38) auf, welches für den Pressvorgang vom Pressstempel (35) mit Kraft beaufschlagt und zur Durchführung der Montage- und Fügebewegung bewegt werden kann. In Figur 4 ist die Presse (23) als Universalpresse mit dem Magazin (37) dargestellt. Figur 5 zeigt das Presswerkzeug (38) und Figur 1 das zugehörige Magazin (39).

Das Presswerkzeug (38) kann vom taktilen Roboter (9) mit seinem Greifwerkzeug (11) gehandhabt werden. Das Presswerkzeug (38) ist zur Aufnahme eines Lagers bzw. Wälzlagers (6) vorgesehen und ausgebildet. Zur Montage unterschiedlicher Lager (6) können verschiedene Presswerkzeuge (38) vorhanden sein, die ebenfalls in einem Magazin (39) am Rand der Basis (53) im Arbeitsbereich des taktilen Roboters (9) angeordnet sind und in definierter Position und Ausrichtung bereitgehalten werden. Der taktile Roboter (9) kann mit seinem Greifwerkzeug (11) die Presswerkzeuge (38) jeweils greifen und der Presse (23) zusammen mit dem Lager (6) zuführen und am bereit gestellten Werkstück (5) positionieren.

Das in Figur 5 gezeigte Presswerkzeug (38) weist an der Unterseite ein ringförmiges Aufnahmemittel zur formschlüssigen und lösbaren Aufnahme eines ringförmigen Wälzlagers (6) auf, wobei mittels einer federnden Raste oder dgl. dessen Lage temporär gesichert werden kann. Ferner weist das Presswerkzeug (38) einen federbelasteten Stempel auf, der an einem Werkzeugkorpus axial und relativ zum Aufnahmemittel beweglich gelagert ist und der bei einer Zustellung das Wälzlager (6) mitnimmt und abschiebt. Das Presswerkzeug (38) hat ferner noch ein Positioniermittel, z.B. einen Bund oder dgl. zur Positionierung an einem Werkstück (5). Das Werkstück (5) kann wellen- oder stangenartig oder auch hülsenartig ausgebildet sein. Die Gestaltung des Presswerkzeugs (38) ändert sich entsprechend.

Das Presswerkzeug (38) besitzt außerdem ein Haltemittel (40) zur Definition und Sicherung der Greifposition an einem Greifwerkzeug (11). Ein solches Haltemittel (40) kann z.B. von dem in Figur 5 gezeigten radialen Bund am oberen Rand des Aufnahmemittels gebildet werden, wobei die Greiffinger (13) eine hieran angepasste Greifkontur aufweisen. Die Greiffinger (13) fassen den Bund (40) seitlich und sind dabei quer zu der in Figur 5 gezeigten Zustell- und Pressachse des Presswerkzeugs (38) ausgerichtet.

Zur Durchführung der Lagermontage greift der taktile Roboter (9) mit seinem Greifwerkzeug (11) das passende Presswerkzeug (38), nimmt damit ein vereinzeltes Wälzlager (6) am Magazin (27) auf und positioniert beide in Pressstellung an dem vom Roboter (10) zugeführten Werkstück (5) in der Pressenaufnahme (36). Bei der Zuführung und Positionierung ist der Pressstempel (35) zurückgezogen. Er wird anschließend gesteuert abwärts bewegt, drückt auf den Stempel des Presswerkzeugs (38) und schiebt diesen mitsamt dem Wälzlager (6) auf oder in das Werkstück (5) und dessen Lagersitz. Während dieser Pressbewegung hält und führt der taktile Roboter (9) das mobile Presswerkzeug (38). Der taktile Roboter (9) folgt dabei ggf. etwas der Pressbewegung. Anschließend entfernt der Roboter (9) das geleerte Presswerkzeug (38) und bringt es ggf. zurück in das Magazin (39), wo er es ablegt oder ggf. gegen ein anderes Presswerkzeug (38) tauscht.

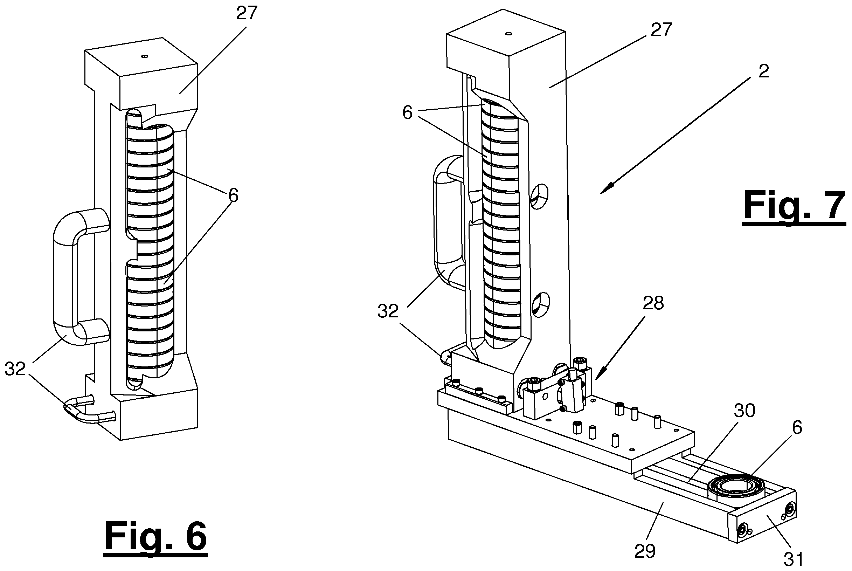

Figur 6 und 7 zeigen ein Magazin (27) für Wälzlager (6). Das Magazin (27) nimmt z.B. in einem Behälter einen säulenartig angeordneten Vorrat von Lagern (6) auf und weist eine Vereinzelung (28) sowie ein Ausgabemittel (29) zur Führung und Bereitstellung eines einzelnen Lagers (6) auf. Der Behälter kann für eine schnelle Nachbestückung wechselbar sein. Das Magazin (27), insbesondere dessen Wechselbehälter, kann außerdem ein Handhabungsmittel (32) aufweisen, welches zum Magazinwechsel und ggf. zu Sicherungszwecken benutzt werden kann, wobei es z.B. aus einem Handgriff und einem in Figur 6 gezeigten Sicherungsmittel für den Lagervorrat bestehen kann. Das Handhabungsmittel (32) kann zur manuellen Handhabung oder ggf. auch zur Handhabung durch einen Roboter, insbesondere einen der taktilen Roboter (9,10) ausgebildet und am Behälter angeordnet sein.

Das Ausgabemittel (29) ist z.B. als Führungsbahn für ein Lager (6) ausgebildet, die einen mit einem axialen, durchgehenden Schlitz (30) versehenen Boden und seitliche Führungsleisten aufweist und bis unter die vertikale Vorratsäule der Lager (6) reicht. Die Führungsbahn (29) kann in diesem Bereich an der Oberseite durch eine Platte abgedeckt sein, die Bestandteil der Vereinzelung (28) ist. Die an der Vorratsäule endende Platte ist in einer Höhe über dem Führungsboden angeordnet, die der Dicke eines Wälzlagers (6) entspricht und nur den Durchtritt eines einzelnen Lagers erlaubt.

Der taktile Roboter (9) benutzt den Mitnehmer (15) zur Entnahme, Vereinzelung und Bereitstellung eines Wälzlagers (6) am Ende der Führungsbahn (29). Er greift hierzu mit dem Mitnehmer (15) von unten durch den Schlitz (30) in das unterste Wälzlager (6) der Vorratsäule und führt anschließend eine Ziehbewegung in Richtung der vorzugsweise geraden Führungsbahn (29) aus, wobei er das Wälzlager (6) mitnimmt und in eine definierte Aufnahmeposition am Ende der Führungsbahn (29) bringt.

Hier kann ein Detektionsmittel (31) für die Verifizierung der Existenz und Position eines bereit gestellten Lagers (6) vorhanden sein. In der gezeigten Ausführungsform ist das Detektionsmittel (31) als Anschlag am Ende der Führungsbahn (29) ausgebildet. Der taktile Roboter (9) kann mit seiner Sensorik (51) die Anschlagstellung als mechanischen Widerstand detektieren, wobei zugleich die aktuelle Roboterposition erfasst wird. Über die Positionserfassung ist erkennbar, ob ein Lager (6) mitgenommen und in korrekter Stellung am Anschlag (31) positioniert wurde oder ob die Lagermitnahme nicht funktioniert hat und der Mitnehmer (15) den Anschlag (31) nicht erreicht oder dort leer anschlägt.

Anschließend nimmt der taktile Roboter (9) das zugehörige Presswerkzeug (38) auf oder hat dieses zuvor schon gegriffen und fasst mit dem Presswerkzeug (38) das positionierte und vereinzelte Wälzlager (6) an geeigneter Stelle, insbesondere am Außen- oder Innenumfang. Danach wird die vorbeschriebene Zustellung zur Presse (23) und der dortige Fügevorgang durchgeführt.

Die Montageeinrichtung (3) dient zur Montage von ein oder mehreren Sicherungsringen (7), die ebenfalls in einem Lager (27) am Rand der Basis (53) bevorratet und bereitgehalten werden. Für die Funktion der Sicherungsmontage kann der vorbeschriebene taktile Roboter (9) mit dem gleichen Greifwerkzeug (11) eingesetzt werden. Alternativ kann das Greifwerkzeug (11) in der vorbeschriebenen Weise, insbesondere durch Tausch der Greiffinger (13), gewechselt werden.

In der gezeigten Ausführungsform sind durch Benutzung gemeinsamer Komponenten die Montageeinrichtungen (2,3) für das Lager (6) und den Sicherungsringen (7) miteinander kombiniert. Alternativ können sie in einer anderen Ausführungsform getrennt ausgebildet und angeordnet sein.

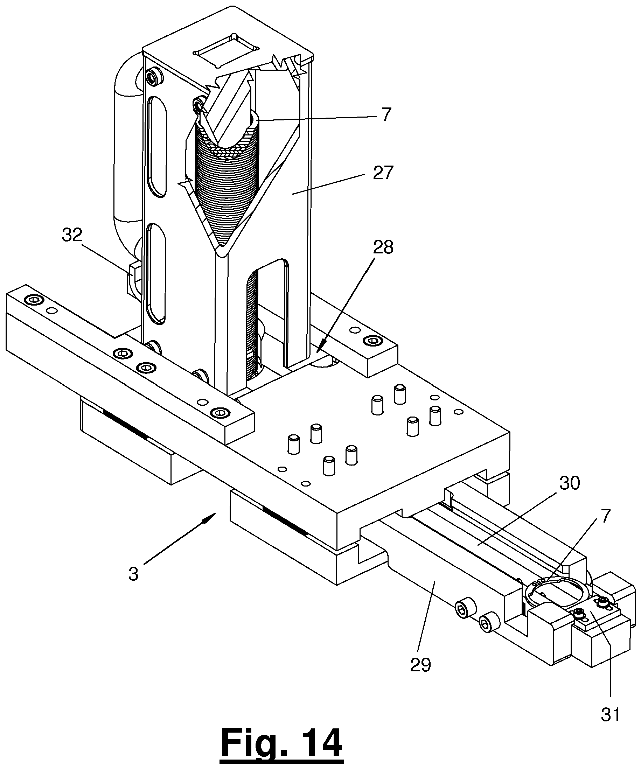

Figur 14 bis 16 zeigen ein Magazin (27) für Sicherungsringe (7) und das Zusammenwirken mit einem taktilen Roboter (9). Der Sicherungsring (7) hat z.B. die übliche runde Bogenform mit den voneinander beabstandeten und verdickten Ringenden, die jeweils eine Durchgangsöffnung bzw. ein Auge aufweisen. An diesen Augen greifen die beiden Greiffinger (13) mit ihrem jeweiligen Aufnahmepin (14) formschlüssig an.

Das Greifwerkzeug (11) kann ggf. durch eine angetriebene Bewegung seiner Greiffinger (13) den Sicherungsring (7) spannen und dabei kontrahieren oder weiten. Falls hierfür die Antriebskraft nicht ausreicht, kann die Montageeinrichtung (3) eine steuerbare und angetriebene Hilfseinrichtung (22) zum besagten Spannen eines Sicherungsrings (7) aufweisen. In dem gezeigten Ausführungsbeispiel ist die Hilfseinrichtung (22) als Spanneinrichtung (24) mit einem Antrieb und mit von außen oder von innen zustellbaren Spannbacken (41) ausgebildet und mit der Steuerung (44) verbunden. Mit den Spannbacken (41) kann der Spannring (7) kontrahiert oder geweitet werden, wobei die im Eingriff stehenden Greiffinger (13) dieser Spannbewegung entsprechend folgen und am Bewegungsende wieder arretiert werden und dann die federnden Rückstellkräfte des Dichtrings (8) aufnehmen. Der Antrieb im Greifwerkzeug (11) ist entsprechend dieser externen Spannbewegung und nachfolgenden Arretierung geschaltet.

Das Lager (6) für die Sicherungsringe (7) kann ähnlich wie das vorbeschriebene Magazin (27) für die Lager (6) ausgebildet sein und weist einen Behälter für eine vertikale Vorratsäule auf, wobei die Sicherungsringe (7) durch entsprechende Führungsmittel in der Vorratsäule eine gemeinsame und definierte Ausrichtung mit der Ringöffnung nach hinten haben und außerdem ggf. von einer axialen Feder für eine sichere Zuführung beaufschlagt werden. Das Magazin (27) weist wiederum ein als geschlitzte (30) Führungsbahn ausgebildetes Ausgabemittel (29) mit einem endseitigen Detektionsmittel (31) und einer Vereinzelung (28) auf. In der Führungsbahn (29) wird dabei durch eine entsprechende Gestaltung der Führungsmittel der Sicherungsring (7) in der vorgegebenen Lage bei der Ausgabebewegung gehalten und gegen Verdrehen, Verkanten und dgl. gesichert. Figur 14 zeigt die Endlage und Bereitstellposition des Sicherungsrings (7) am Anschlag (31). In diesem Bereich kann der Boden der Führungsbahn eine Quernut im Bereich der besagten Augen aufweisen, die einen Durchgriff der Aufnahmepins (14) und deren Querbewegung zum Spannen des Sicherungsrings (7) ermöglicht. Dies kann ggf. ein Teilspannen zum Entformen und Entnehmen des aufgenommenen Sicherungsrings (3) aus der formschlüssigen Führungsbahn (29) sein, wobei in der Hilfseinrichtung (22) ein Fertigspannen erfolgt.

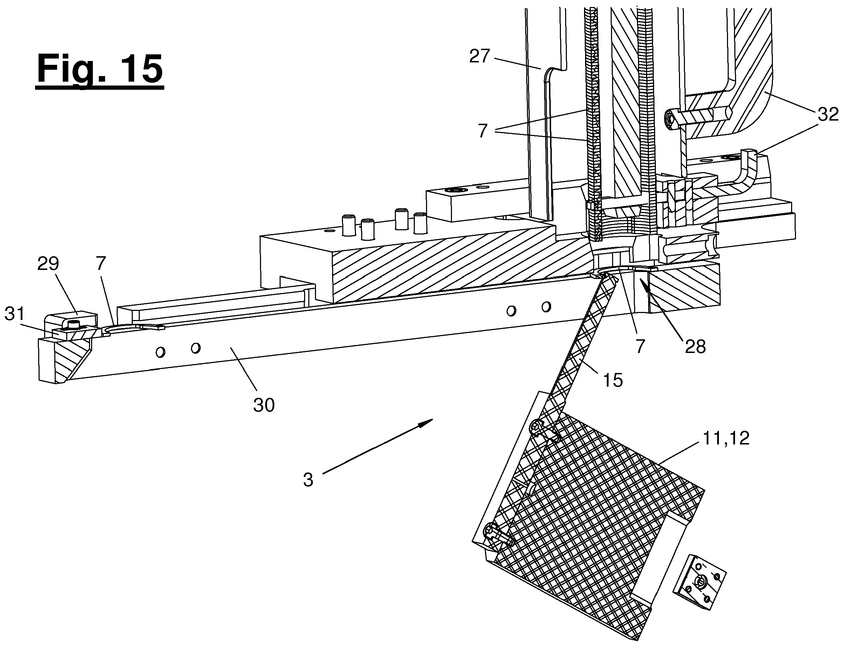

Figur 15 zeigt in der aufgebrochenen Darstellung den Eingriff des hochragenden Mitnehmers (15) am Greifwerkzeug (11) durch den Schlitz (30) am untersten Sicherungsring (7). Auch hier dient am Ende der Ausziehbewegung das z.B. als Anschlag ausgebildete Detektionsmittel (31) zur vorbeschriebenen Verifizierung der Existenz und korrekten Position eines vereinzelten Sicherungsrings (7). Ansonsten hat auch das Magazin (27) für Sicherungsringe (7) ein Handhabungsmittel (32) der vorbeschriebenen Art.

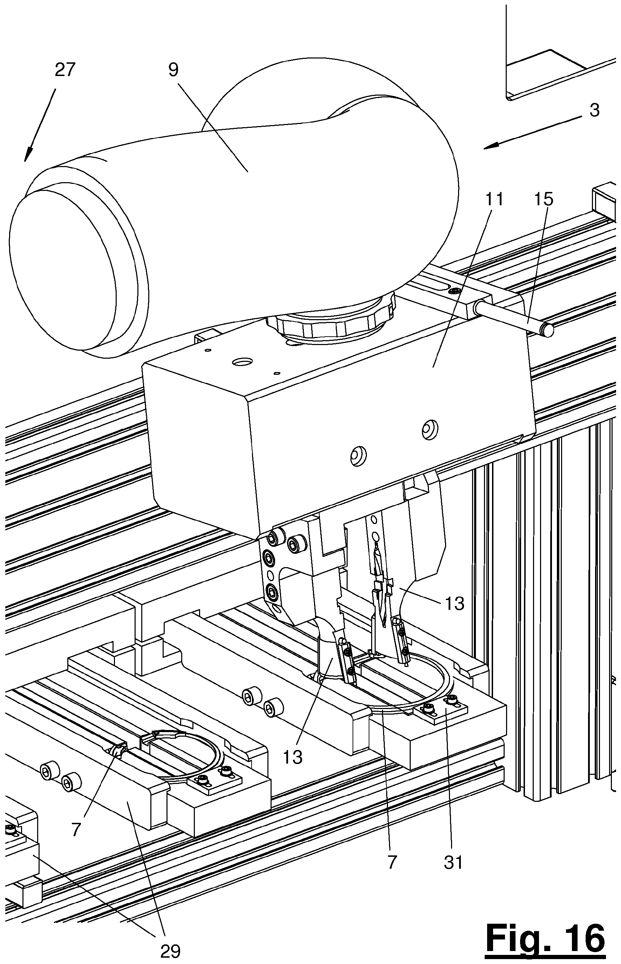

Figur 15 und 16 verdeutlichen den Entnahmevorgang für einen Sicherungsring (7), der zunächst mit dem Mitnehmer (15) in die Entnahmeposition am Anschlag (31) gebracht wird, wobei anschließend der taktile Roboter (9) das Greifwerkzeug (11) umorientiert und von oben mit den entsprechend positionierten Greiffingern (13) an den bereit gestellten Sicherungsring (7) zustellt, wobei der Aufnahmepin (14) an jedem Greiffinger (13) in sein zugehöriges Auge greift. Die Greiffinger (13) können neben dem jeweiligen Aufnahmepin (14) noch eine ebene oder ggf. konturierte Stirnfläche aufweisen, die eine Anlagefläche an der Oberseite und ggf. an einer inneren und/oder äußeren Seitenwand des Sicherungsrings (7) bildet und die den aufgenommenen Sicherungsring (7) zusätzlich zu dem Aufnahmepin (14) führt.

Der taktile Roboter (9) kann den aufgenommenen Sicherungsring (7) für dessen Montage selbst mit seinem Greifwerkzeug (11) spannen oder der vorbeschriebenen Hilfseinrichtung (22) zuführen. Anschließend bewegt der taktile Roboter (9) den gespannten Sicherungsring (7) an die vorgesehene Montageposition am Werkstück (5), z.B. eine innere oder äußere Umfangsnut. Bei der Montage kann der taktile Roboter (9) unter Einsatz seiner Sensorik (51) die vorgesehene Montageposition durch seine Bahnsteuerung und durch eine tastende Suchbewegung taktil erfassen, verifizieren und den Sicherungsring (7) dann in der Nut positionieren. Hierbei kann er den Sicherungsring (7) zeitweise schräg zur Werkstückachse halten und dabei z.B. mit dem verbreiterten Scheitelbereich des gespannten Sicherungsrings (7) den Nuteneingriff suchen. Nach Auffinden der Eingriffsstellung kann der taktile Roboter (9) den schräg gehaltenen Sicherungsring (7) in eine Parallellage zur besagten Aufnahmenut kippen, anschließend durch eine Ausfahrbewegung seiner Greiffinger (13) entspannen, dabei auch seitlich in die Nut zur Herstellung einer umfangseitigen formschlüssigen Führung eingreifen lassen und anschließend die Greiffinger (13) mit den Aufnahmepins (14) aus dem formschlüssig gehaltenen Sicherungsring (7) herausziehen und entfernen.

Die vorbeschriebene Sicherungsringmontage kann von dem gleichen taktilen Roboter (9) nach der zuvor erfolgten Montage eines Lagers (6) durchgeführt werden. Falls z.B. das in Figur 2 gezeigte große Zahnrad beidseits mit Lagern (6) und Sicherungsringen (7) auf seinen Lagerzapfen versehen werden soll, kann zunächst in der vorbeschriebenen Weise an der einen Seite ein Lager (6) und ein Sicherungsring (7) montiert werden, wobei anschließend einer der Handhabungsroboter (9,10) das Werkstück (5) aus der Pressenaufnahme (36) oder einer anderen Werkstückaufnahme entnimmt und an den anderen taktilen Roboter (10,9) übergibt, welcher dann das Werkstück (5) in umgedrehter Ausrichtung wieder in die besagte Aufnahme einsetzt. Eine solche Aufnahme, insbesondere Pressenaufnahme (36) kann hierbei ggf. in der Zwischenzeit von dem einen taktilen Roboter (10) gewechselt werden. Anschließend finden die vorbeschriebenen Montagevorgänge für Lager (6) und Sicherungsring (7) an der anderen Werkstückseite statt.

Mit der Montageeinrichtung (4) können ein oder mehrere Dichtringe (8) an einem Werkstück (5) montiert werden. Die Dichtringe (8) sind z.B. als sog. O-Ringe ausgebildet und bestehen aus einem schnurförmigen elastischen Material, z.B. Kautschuk oder einem anderen Kunststoff.

Die Montageeinrichtung (4) weist auch in diesem Fall einen taktilen Roboter (9,10) mit einem steuerbaren Greifwerkzeug (11,12) und vorzugsweise auch eine steuerbare und angetriebene Hilfseinrichtung (22) zum Fügen des Dichtrings (8) an einem Werkstück (5) auf. Die Hilfseinrichtung (22) weist im gezeigten Ausführungsbeispiel ein mobiles Magazin (33) für Dichtringe (8) und eine steuerbare, mit der Steuerung (44) verbundene sowie angetriebene Setzeinrichtung (25) auf. Das mobile Magazin (33) hat z.B. einen zylindrischen, insbesondere rohrförmigen Aufnahmebereich für mehrere Dichtringe (8) am einen Ende und ein Griffteil am anderen Ende, welches vom einen taktilen Roboter (9) mit seinem Greifwerkzeug (11) definiert gegriffen werden kann.

Das Magazin (33) kann in vorgegebener Position lose auf einer Aufnahme auf der Basis (53) ruhen und wird vom taktilen Roboter (9) auf die Setzeinrichtung (25) gesetzt, die dann einen Dichtring (8) aus dem Magazin (33) einzeln entnimmt und weitet. Die Setzeinrichtung (25) kann hierfür ein angetriebenes Setzwerkzeug (42) mit mehreren radial auseinanderbewegbaren Fingern (43) aufweisen, welche durch Öffnungen am Aufnahmebereich des Magazins (33) greifen, einen einzelnen Dichtring (8) aufnehmen und diesen spannen. Der andere taktile Roboter (10) kann ein Werkstück (5), z.B. ein hülsenartiges Gehäuse, an die Setzeinrichtung (25) zustellen, die dann den Dichtring (8) abstreift und an einen vorgesehenen Aufnahmebereich des Werkstücks (5) übergibt. Der taktile Roboter (10) kann dabei ggf. eine Bewegung mit dem Werkstück (5) zur Unterstützung des Abstreifvorgangs ausführen, wobei die Sensorik (51) zur Überwachung des Vorgangs auf evtl. Fehlfunktionen und Kollisionen eingesetzt werden kann.

Die Montageeinrichtung (4) kann außerdem eine Prüfeinrichtung (26) für das Werkstück (5) mit dem gefügten Dichtring (8) aufweisen. Diese besteht z.B. aus einem Prüfgestell mit einer Prüföffnung in definierter Form und Position. Der Handhabungsroboter (10) kann nach der Dichtringmontage das Werkstück (5) in die Prüföffnung einführen und mit seiner Sensorik (51) und der Positionserfassung feststellen, ob ein Dichtring (8) vorhanden ist und ob er sich an der richtigen Stelle des Werkstücks (5) befindet. Der Dichtring (8) kontaktiert bei der definierten Zustellung den Rand der Prüföffnung, wobei ein mechanischer Widerstand detektiert und die Roboterposition erfasst wird.

In den gezeigten Ausführungsbeispielen werden an den Werkstücken (5) einzelne oder kombinierte Montagevorgänge durchgeführt. Die Montageprozesse können in beliebiger Weise miteinander kombiniert und ggf. auch vertauscht werden. Der gezeigten kombinierten Montage von ein oder mehreren Lagern (6) und ein oder mehreren Sicherungsringen (7) kann eine einzelne oder mehrfache Montage von einem Dichtring (8) folgen oder alternativ vor- oder zwischengeschaltet sein. Die Art und Reihenfolge der Montagevorgänge hängt von der Art der Werkstücke (5) und der zu montierenden Teile (6,7,8) ab und kann entsprechend geändert werden.

Ferner können alternativ oder zusätzlich andere Montagevorgänge an den einzelnen oder kombinierten Montageeinrichtungen (2,3,4) oder auch in der Montagezelle (1) durchgeführt werden. Hierfür können z.B. Pins in ein Werkstück (5) gesteckt, Gleitringe, z.B. Zylinderringe, oder dgl. aufgesetzt werden. Ferner können andere Arten von Fügevorgängen, z.B. Kleben, Schweißen oder dgl. und auch sonstige Bearbeitungsvorgänge, z.B. Beschichten, Abdichten, Umformen, spanende Bearbeitung oder dgl. durchgeführt werden. Für diese Vorgänge können die vorhandenen ein oder mehreren taktilen Roboter (9,10) ebenfalls eingesetzt werden, wobei ggf. auch die vorhandenen Greifwerkzeuge (11,12) benutzt werden können, die dann mit entsprechenden Füge- oder Bearbeitungswerkzeugen zusammenwirken. Am Ende des Montageprozesses oder sonstigen Prozesses kann ein taktiler Roboter (10) das fertige Werkstück (5) entnehmen und der Abführeinrichtung (55) übergeben.

Der in Figur 8 beispielhaft dargestellte taktile Roboter (9,10) hat z.B. vier gelenkig miteinander verbundene Glieder, nämlich ein auf der Basis (53) befestigbares Basisglied (49), zwei daran anschließende Zwischenglieder (47,48) und ein Endglied (46). Die Glieder (46 bis 49) sind untereinander über Roboterachsen (II,IV,VI) verbunden, wobei die Zwischenglieder (47,48) axial in zwei Hälften unterteilt werden können, die um weitere Roboterachsen (III,V) gegeneinander verdrehbar sind. Das Basisglied (49) ist um eine Roboterachse (I) auf einem Sockel drehbar, wobei am Sockel auch ein Anschluss für eine Kabelverbindung zur Robotersteuerung (44) vorhanden ist.

Die Roboterachsen (I-VII) können eine steuer- oder schaltbare Bremse aufweisen. Die Roboterglieder (46 bis 49) können hohl ausgebildet sein und eine oder mehrere innen durchgeführte Leitungen für Betriebsmittel, z.B. Leistungs- und Signalströme, Fluide etc. aufnehmen, die am Endglied (46) nach außen treten und am Greifwerkzeug (11,12) oder an einer ggf. zwischengeschalteten Wechselkupplung (52) angeschlossen werden. Hierüber kann eine Betriebsmittelversorgung des Greifwerkzeugs (11,12) und seiner Komponenten, insbesondere eines komplexen Greiffingers mit Zusatzachsen, erfolgen.

Die z.B. sieben Roboterachsen (I-VII) können kraftgesteuert oder kraftgeregelt sein. Der Roboter (9,10) kann außerdem mindestens eine nachgiebige Roboterachse (I-VII) mit einer Nachgiebigkeitsregelung, insbesondere einer reinen Kraftregelung oder einer Kombination aus einer Positions- und Kraftregelung aufweisen. Die hierfür eingesetzte Sensorik (51) ist mit der Robotersteuerung (44) verbunden.

Die Roboterachsen (I-VII) weisen jeweils ein Drehlager und einen hier angeordneten steuerbaren oder regelbaren Antrieb nebst ein oder mehreren Sensoren auf, die zu der vorgenannten Sensorik (51) gehören. Die einzelnen Sensoren können z.B. als Momentensensoren ausgebildet sein, die von außen einwirkende Belastungen aufnehmen. Die gleichen oder weitere Sensoren können ggf. auch Drehbewegungen und Drehpositionen an der betreffenden Roboterachse (I-VII) detektieren. Die vorgenannte Kraftsteuerung oder Kraftregelung der Roboterachsen (I-VII) bezieht sich auf die Wirkung nach außen am Abtriebselement (45) des Endglieds (46) sowie auf die dort einwirkenden Reaktionskräfte und Reaktionsmomente. Roboterintern findet an den drehenden Achsen oder Achsantrieben eine Momentensteuerung oder Momentenregelung statt. Mittels der Sensorik (51) kann von der Robotersteuerung (44) die vorgenannte Nachgiebigkeitsregelung realisiert werden.

Die durch die Sensorik (51) erzielbaren taktilen Eigenschaften des Roboters (9,10) können in verschiedener Weise eingesetzt und als Ersatz für eine sonstige externe Sensorik an der oder den Montageeinrichtung(en) (2,3,4) benutzt werden. Die Prozessüberwachung bei der Handhabung der Werkstücke (5) und der zu montierenden Teile (6,7,8) sowie beim Montage- oder Fügeprozess kann weitgehend oder vollständig über die Sensorik (51) des oder der taktilen Roboter (9,10) erfolgen.

Der taktile Roboter (9) kann einerseits das Greifwerkzeug (11,12) federnd und ausweichfähig halten und führen, wobei z.B. Crashs und insbesondere Unfälle mit Personen vermieden werden können. Die Eigenschaft kann auch zum manuellen Teachen und Programmieren benutzt werden, mit dem Vorteil einer schnellen und einfachen Programmierung, Inbetriebnahme sowie Anpassbarkeit an unterschiedliche Werkzeuge und damit auszuführende Prozesse und Jobs. Über eine Belastungserfassung der Sensorik (51) kann außerdem das Suchen und Finden von Montage- oder Arbeitspositionen und auch von den Kupplungsstellungen beim Werkzeug- oder Fingerwechsel unterstützt und erleichtert werden. Der taktile Roboter (9,10) kann bei der Suchfahrt tastende und ggf. auch oszillierende Bewegungen ausführen. Ferner können Winkelfehler in der Relativstellung der Glieder (46-49) detektiert und bedarfsweise korrigiert werden.

Die Sensorik (51) kann ferner zur Überprüfung der Formhaltigkeit und Funktionsfähigkeit der Greifwerkzeuge (11,12) und deren Komponenten, insbesondere Greiffingern (13) und Greifmittel (14) sowie Mitnehmer (15) benutzt werden. Der taktile Roboter (9) kann z.B. das Greifwerkzeug (11,12) mit den zu überprüfenden Elementen an einem Referenzpunkt mit bekannter Position in einen leichten Berührungskontakt bringen, wobei die Roboterbewegung und -position erfasst und ein Berührungskontakt mittels der Sensorik (51) detektiert wird. Die Nachgiebigkeitsregelung verhindert bei dieser Überprüfung, wie auch bei der vorgenannten Suchfahrt schadenträchtige Kollisionen und schaltet die Roboterbewegung bei Überschreiten einer vorgegebenen Belastungsschwelle ab. Durch Vergleich der Soll- und IstPosition des Roboters (9,10) bei einem als mechanischer Widerstand detektierten Berührungskontakt kann festgestellt werden, ob ein Greifwerkzeug (11,12) intakt oder beschädigt ist und ob insbesondere der programmierte Tool-Center-Point (TCP) des Greifwerkzeugs (11,12) sich noch an der vorgegebenen Position befindet.

Ein taktiler Roboter (9,10) kann ferner als Leichtbauroboter ausgebildet sein und aus leichtgewichtigen Materialien, z.B. Leichtmetallen und Kunststoffen bestehen. Er hat auch eine kleine Baugröße und ein niedriges Gewicht von z.B. ca. 30 kg. Ein solcher Leichtbauroboter kann mobil sein und kann sich manuell von einem Einsatzort zu einem anderen transportieren lassen.

Alternativ zu den gezeigten Ausführungsformen kann ein taktiler Roboter (9,10) eine andere Zahl und Kinematik von Roboterachsen haben. Dies können translatorische und/oder rotatorische Achsen in beliebiger Zahl und Kombination sein. Die interne Beweglichkeit von Zwischengliedern (47,48) kann entfallen.

Abwandlungen der gezeigten und vorbeschriebenen Ausführungsformen sind in verschiedener Weise möglich.

Die vorbeschriebene(n) Montageeinrichtung(en) (2,3,4) kann/können jeweils nur mit einem taktilen Roboter (9,10) oder alternativ mit drei oder mehr taktilen Robotern (9,10) ausgerüstet sein. Die beschriebenen Montageeinrichtungen (2,3,4) haben eigenständige erfinderische Bedeutung und können isoliert ausgebildet und angeordnet sein. Sie können jeweils eine eigene Basis (53) und eigene Magazine (27,22,37,39) haben. Die einzelnen Montageeinrichtungen (2,3,4) können auch miteinander in einer Reihe oder in einem Netzwerk verkettet sein. Ferner können ein oder mehrere andere und z.B. auch positionsgesteuerte Roboter zusätzlich vorhanden sein, insbesondere für Schwerlastaufgaben.

Ferner sind konstruktive Abwandlungen der Zellenausbildung und ihrer Komponenten, insbesondere auch hinsichtlich der Hilfseinrichtungen (22) möglich. Eine Spanneinrichtung (24) mit angetriebenen Spannbacken (41) kann entfallen oder durch eine andere Ausführungsform ersetzt werden. Eine andere Hilfseinrichtung (22) zum Spannen eines Sicherungsrings kann z.B. aus einer konischen Führungshülse und einer Presse (23) bestehen, wobei die Führungshülse von einem ein taktilen Roboter (9,10) an einem an der Presse (23) positionierten Werkstück (5) angesetzt wird. Ein taktiler Roboter (9) kann den aufgenommenen Sicherungsring (7) auf der Führungshülse aufsetzen, wobei das anschließend abgesenkte Presswerkzeug den Sicherungsring (7) an der Hülse entlangschiebt und dabei weitet sowie ggf. bis zur Aufnahmenut bewegt. Der taktile Roboter (9) kann dabei mit dem Sicherungsring (7) über sein Greifwerkzeug (11) im Eingriff bleiben und eine Führungsfunktion haben. Auch die Hilfseinrichtung (22), insbesondere die Setzeinrichtung (25), für einen Dichtring (8) kann konstruktiv und funktional abgewandelt werden.

Konstruktive und funktionale Abwandlungen sind auch hinsichtlich der anderen Komponenten der Montageeinrichtungen (2,3,4), z.B. der Magazine (27), möglich. Die Magazine (27), können z.B. komplett gewechselt werden. Sie können auch stationär angeordnet sein, wobei lediglich die Vorratsstapel von Lagern (6) und/oder Sicherungsringen (7) ausgetauscht werden.

Das Ausgabemittel (29) kann in anderer Weise ausgebildet sein und eine eigene steuerbare Kinematik bzw. Antriebstechnik zur Vereinzelung, Ausgabe und Positionierung von Lagern (6) und/oder Sicherungsringen (7) aufweisen. Auch die Detektionseinrichtung (31) kann in anderer Weise ausgebildet sein und kann z.B. eine am Magazin (27) oder an anderer geeigneter Stelle angeordnete Sensorik umfassen. Die vorbeschriebenen Antriebe oder Zusatzachsen des Magazins (27) und ggf. auch die mit Sensorik ausgerüstete Detektionseinrichtung (31) können mit der Steuerung (44) verbunden sein. Der taktile Roboter (9) kann dabei von den besagten Funktionen entbunden werden.

### BEZUGSZEICHENLISTE

- 1: Montagezelle
- 2: Montageeinrichtung für Lager
- 3: Montageeinrichtung für Sicherungsring
- 4: Montageeinrichtung für Dichtring
- 5: Werkstück
- 6: Lager, Wälzlager
- 7: Sicherungsring
- 8: Dichtring
- 9: taktiler Roboter
- 10: taktiler Roboter
- 11: Greifwerkzeug
- 12: Greifwerkzeug
- 13: Greiffinger
- 14: Greifmittel, Aufnahmepin
- 15: Mitnehmer, Vereinzelungsstift
- 16: Basis
- 17: Adapter
- 18: Wechseleinrichtung
- 19: Kupplungseinrichtung für Greiffinger
- 20: Verriegelung für Greiffinger
- 21: Betätigungseinrichtung
- 22: Hilfseinrichtung
- 23: Presse
- 24: Spanneinrichtung für Sicherungsring
- 25: Setzeinrichtung für Dichtring
- 26: Prüfeinrichtung
- 27: Magazin für Lager oder Sicherungsring
- 28: Vereinzelung
- 29: Ausgabemittel, Führungsmittel
- 30: Schlitz
- 31: Detektionsmittel, Anschlag
- 32: Handhabungsmittel
- 33: Magazin für Dichtring
- 34: Halter für Greiffinger
- 35: Pressmittel, Pressstempel
- 36: Pressenaufnahme
- 37: Magazin für Pressenaufnahmen
- 38: Presswerkzeug
- 39: Magazin für Presswerkzeuge
- 40: Haltemittel, Bund
- 41: Spannbacke
- 42: Setzwerkzeug für Dichtring
- 43: Finger
- 44: Steuerung, Robotersteuerung
- 45: Abtriebselement, Abtriebsflansch, Drehflansch
- 46: Glied, Endglied, Hand
- 47: Glied, Zwischenglied
- 48: Glied, Zwischenglied
- 49: Glied, Basisglied
- 50: Drehachse
- 51: Sensorik
- 52: Wechselkupplung
- 53: Basis, Tisch
- 54: Zuführeinrichtung
- 55: Abführeinrichtung
- 56: Werkstückträger

- I - VII: Achse von Roboter

## Patentansprüche

1. Montageeinrichtung für die Montage von Lagern (6), insbesondere Wälzlagern, an einem Werkstück (5), **dadurch gekennzeichnet, dass** die Montageeinrichtung (2) einen taktilen Roboter (9,10) mit einem steuerbaren Greifwerkzeug (11,12) und eine mit dem taktilen Roboter zusammenwirkende, steuerbare und angetriebene Hilfseinrichtung (22) zum Fügen des Lagers (6) am Werkstück (5) aufweist.

2. Montageeinrichtung nach Anspruch 1, **dadurch gekennzeichnet, dass** die Hilfseinrichtung (22) eine steuerbare Presse (23) mit einem angetriebenen Pressmittel (35), einer Pressenaufnahme (36) und einem Presswerkzeug (38) aufweist.

3. Montageeinrichtung nach Anspruch 1 oder 2, **dadurch gekennzeichnet, dass** eine Pressenaufnahme (36) und/oder ein Presswerkzeug (38) wechselbar ausgebildet sind, wobei die Montageeinrichtung (2) ein Magazin (37,39) für mehrere unterschiedliche Pressenaufnahmen (36) und/oder Presswerkzeuge (38) aufweist.

4. Montageeinrichtung nach Anspruch 1, 2 oder 3, **dadurch gekennzeichnet, dass** ein taktiler Roboter (9,10) ein zur Handhabung einer Pressenaufnahme (36) und/oder eines Presswerkzeugs (38) ausgebildetes Greifwerkzeug (11,12), aufweist und gegebenenfalls zum Führen des Presswerkzeugs (38) beim Pressen vorgesehen und ausgebildet ist.

5. Montageeinrichtung nach einem der vorhergehenden Ansprüche, **dadurch gekennzeichnet, dass** die Montageeinrichtung (2) ein Magazin (27) mit einer Vereinzelung (28) und einem Ausgabemittel (29) zur Führung und Bereitstellung für einzelne Lager (6) aufweist.

6. Montagezelle für die Montage von Lagern (6), insbesondere Wälzlagern, an einem Werkstück (5), **dadurch gekennzeichnet, dass** die Montagezelle (1) eine Montageeinrichtung nach mindestens einem der Ansprüche 1 bis 5 aufweist.

7. Montagezelle nach Anspruch 6, **dadurch gekennzeichnet, dass** die Montagezelle (1) eine Montageeinrichtung (3) für Lager Sicherungsringe (7) und/oder eine Montageeinrichtung (4) für Dichtringe (8) aufweist.

8. Montagezelle nach Anspruch 7, **dadurch gekennzeichnet, dass** die Montageeinrichtung (3) ein Magazin (27) mit einer Vereinzelung (28) und einem Ausgabemittel (29) zur Führung, Positionierung und Bereitstellung für einzelne Sicherungsringe (7) sowie eine steuerbare und angetriebene Hilfseinrichtung (22) zum Spannen eines Sicherungsrings (7) aufweist, wobei die Hilfseinrichtung (22) eine Spanneinrichtung (24) mit zustellbaren Spannbacken (41) zum Kontrahieren oder Weiten des Sicherungsrings (7) aufweist.

9. Montagezelle nach Anspruch 7 oder 8, **dadurch gekennzeichnet, dass** die Montageeinrichtung (4) eine angetriebene Hilfseinrichtung (22) zum Fügen des Dichtrings (8) am Werkstück (5) aufweist, wobei die Hilfseinrichtung (22) ein mobiles Magazin (33) für Dichtringe (8) und eine steuerbare und angetriebene Setzeinrichtung (25) zum einzelnen Entnehmen und zum Weiten eines Dichtrings (8) aufweist.

10. Montagezelle nach einem der Ansprüche 6 bis 9, **dadurch gekennzeichnet, dass** die Montagezelle (1) zwei oder mehr kooperierende taktile Roboter (9,10) mit einer gemeinsamen Robotersteuerung (44) aufweist.

11. Montagezelle nach einem der Ansprüche 6 bis 10, **dadurch gekennzeichnet, dass** die Hilfseinrichtung(en) (22) und der oder die taktile(n) Roboter (9) mit einer gemeinsamen Steuerung (44), insbesondere einer Robotersteuerung, verbunden sind.

12. Montagezelle nach einem der Ansprüche 6 bis 11, **dadurch gekennzeichnet, dass** ein Greifwerkzeug (11,12) als Parallelgreifer mit zwei oder mehr parallelen und relativ zueinander gesteuert beweglichen sowie wechselbaren Greiffingern (13) ausgebildet ist.

13. Montagezelle nach einem der Ansprüche 6 bis 12, **dadurch gekennzeichnet, dass** ein taktiler Roboter (9,10) ein an mehrere unterschiedliche zu greifende Gegenstände, insbesondere Werkstück (5), Lager (6), Sicherungsring (7), Magazin (33), Pressenaufnahme (36) oder Presswerkzeug (38) adaptiertes und steuerbares Greifwerkzeug (11,12) aufweist.

14. Montagezelle nach einem der Ansprüche 6 bis 13, **dadurch gekennzeichnet, dass** ein Greifwerkzeug (11,12) ein Basisteil (16) mit steuerbar angetriebenen Adaptern (17) und einer Kupplungseinrichtung (19) sowie einer steuerbarren Verriegelung (20) zur wechselbaren Aufnahme von Greiffingern (13) aufweist, wobei die Montageeinrichtung (2,3,4) eine Wechseleinrichtung (18) für Greiffinger (13) mit mehreren Haltern (34) zur positionsgenauen Aufnahme abgekuppelter Greiffinger (13) und einer Betätigungseinrichtung (21) für die Verriegelung (20) aufweist.

15. Montagezelle nach einem der Ansprüche 6 bis 14, **dadurch gekennzeichnet, dass** ein taktiler Roboter (9,10) eine oder mehrere kraftgesteuerte oder kraftgeregelte Roboterachsen (I - VII) und eine einwirkende Belastungen erfassende integrierte Sensorik (51) aufweist.

## Claims

1. Mounting device for mounting bearings (6), in particular rolling bearings, on a workpiece (5), **characterized in that** the mounting device (2) has a tactile robot (9, 10) with a controllable gripping tool (11, 12), and a controllable and driven auxiliary device (22), cooperating with the tactile robot, for joining the bearing (6) to the workpiece (5).

2. Mounting device according to Claim 1, **characterized in that** the auxiliary device (22) has a controllable press (23) with a driven pressing means (35), a press receptacle (36) and a pressing tool (38).

3. Mounting device according to Claim 1 or 2, **characterized in that** a press receptacle (36) and/or a pressing tool (38) are configured in an interchangeable manner, wherein the mounting device (2) has a magazine (37, 39) for several different press receptacles (36) and/or pressing tools (38).

4. Mounting device according to Claim 1, 2 or 3, **characterized in that** a tactile robot (9, 10) has a gripping tool (11, 12) configured to handle a press receptacle (36) and/or a pressing tool (38), and is optionally configured and provided to guide the pressing tool (38) during pressing.

5. Mounting device according to one of the preceding claims, **characterized in that** the mounting device (2) has a magazine (27) with a separator (28) and an output means (29) for guiding and providing individual bearings (6).

6. Mounting cell for mounting bearings (6), in particular rolling bearings, on a workpiece (5), **characterized in that** the mounting cell (1) has a mounting device according to at least one of Claims 1 to 5.

7. Mounting cell according to Claim 6, **characterized in that** the mounting cell (1) has a mounting device (3) for bearings, securing means (7) and/or a mounting device (4) for sealing rings (8).

8. Mounting cell according to Claim 7, **characterized in that** the mounting device (3) has a magazine (27) having a separator (28) and an output means (29) for guiding, positioning and providing individual securing rings (7), and also a controllable and driven auxiliary device (22) for clamping a securing ring (7), wherein the auxiliary device (22) has a clamping device (24) with adjustable clamping jaws (41) for contracting or expanding the securing ring (7).

9. Mounting cell according to Claim 7 or 8, **characterized in that** the mounting device (4) has a driven auxiliary device (22) for joining the sealing ring (8) to the workpiece (5), wherein the auxiliary device (22) has a mobile magazine (33) for sealing rings (8) and a controllable and driven setting device (25) for individually removing and for expanding a sealing ring (8).

10. Mounting cell according to one of Claims 6 to 9, **characterized in that** the mounting cell (1) has two or more cooperating tactile robots (9, 10) with a common robot controller (44).

11. Mounting cell according to one of Claims 6 to 10, **characterized in that** the auxiliary device(s) (22) and the tactile robot (s) (9) are connected to a common controller (44), in particular a robot controller.

12. Mounting cell according to one of Claims 6 to 11, **characterized in that** a gripping tool (11, 12) is configured as a parallel gripper having two or more parallel gripping fingers (13) that are moveable relative to one another in a controlled manner and are interchangeable.

13. Mounting cell according to one of Claims 6 to 12, **characterized in that** a tactile robot (9, 10) has a controllable gripping tool (11, 12) adapted to several different articles to be gripped, in particular workpiece (5), bearing (6), securing ring (7), magazine (33), press receptacle (36) or pressing tool (38).

14. Mounting cell according to one of Claims 6 to 13, **characterized in that** a gripping tool (11, 12) has a base part (16) with adapters (17) that are driven in a controllable manner and a coupling device (19) and also a controllable lock (20) for the interchangeable reception of gripping fingers (13), wherein the mounting device (2, 3, 4) has a changing device (18) for gripping fingers (13) with several holders (34) for the positionally accurate reception of uncoupled gripping fingers (13) and an actuating device (21) for the lock (20) .

15. Mounting cell according to one of Claims 6 to 14, **characterized in that** a tactile robot (9, 10) has one or more force-controlled or force-regulated robot axes (I-VII) and an integrated sensor system (51) that senses acting loads.

## Revendications

1. Dispositif de montage pour le montage de paliers (6), en particulier de paliers à roulement, sur une pièce (5), **caractérisé en ce que** le dispositif de montage (2) présente un robot tactile (9, 10) avec un outil de préhension pilotable (11, 12) et un dispositif auxiliaire entraîné et pilotable (22) coopérant avec le robot tactile pour l'assemblage du palier (6) sur la pièce (5).

2. Dispositif de montage selon la revendication 1, **caractérisé en ce que** le dispositif auxiliaire (22) présente une presse pouvant être commandée (23) avec un moyen de pressage entraîné (35), un logement de presse (36) et un outil de presse (38).

3. Dispositif de montage selon la revendication 1 ou 2, **caractérisé en ce qu'**un logement de presse (36) et/ou un outil de presse (38) sont réalisés sous forme interchangeable, dans lequel le dispositif de montage (2) présente un magasin (37, 39) pour plusieurs logements de presse (36) et/ou outils de presse (38) différents.

4. Dispositif de montage selon la revendication 1, 2 ou 3, **caractérisé en ce qu'**un robot tactile (9, 10) présente un outil de préhension (11, 12) configuré pour la manipulation d'un logement de presse (36) et/ou d'un outil de presse (38), et est éventuellement prévu et configuré pour guider l'outil de presse (38) lors du pressage.

5. Dispositif de montage selon l'une quelconque des revendications précédentes, **caractérisé en ce que** le dispositif de montage (2) présente un magasin (27) avec une séparation (28) et un moyen de remise (29) pour le guidage et la mise à disposition de paliers individuels (6) .

6. Cellule de montage pour le montage de paliers (6), en particulier de paliers à roulement, sur une pièce (5), **caractérisée en ce que** la cellule de montage (1) présente un dispositif de montage selon au moins une des revendications 1 à 5.

7. Cellule de montage selon la revendication 6, **caractérisée en ce que** la cellule de montage (1) présente un dispositif de montage (3) pour des paliers, des bagues de fixation (7) et/ou un dispositif de montage (4) pour des bagues d'étanchéité (8).

8. Cellule de montage selon la revendication 7, **caractérisée en ce que** le dispositif de montage (3) présente un magasin (27) avec une séparation (28) et un moyen de remise (29) pour le guidage, le positionnement et la mise à disposition de bagues de fixation individuelles (7) ainsi qu'un dispositif auxiliaire pilotable et entraîné (22) pour le serrage d'une bague de fixation (7), dans laquelle le dispositif auxiliaire (22) présente un dispositif de serrage (24) avec des mâchoires de serrage (41) pouvant être rapprochées pour contracter ou élargir la bague de fixation (7).

9. Cellule de montage selon la revendication 7 ou 8, **caractérisée en ce que** le dispositif de montage (4) présente un dispositif auxiliaire (22) pour l'assemblage de la bague d'étanchéité (8) sur la pièce (5), dans laquelle le dispositif auxiliaire (22) présente un magasin mobile (33) pour des bagues d'étanchéité (8) et un dispositif de pose pilotable et entraîné (25) pour le prélèvement individuel et pour l'élargissement d'une bague d'étanchéité (8).

10. Cellule de montage selon l'une quelconque des revendications 6 à 9, **caractérisée en ce que** la cellule de montage (1) présente deux ou plusieurs robots tactiles (9, 10) avec une commande de robots commune (44) .

11. Cellule de montage selon l'une quelconque des revendications 6 à 10, **caractérisée en ce que** le/les dispositif(s) auxiliaire(s) (22) et le ou les robot(s) tactile(s) (9) est/sont relié(s) à une commande commune (44), en particulier une commande de robots.

12. Cellule de montage selon l'une quelconque des revendications 6 à 11, **caractérisée en ce qu'**un outil de préhension (11, 12) est réalisé sous forme de pince parallèle avec deux ou plusieurs doigts de préhension (13) parallèles et mobiles de façon commandée l'un par rapport à l'autre et interchangeables.

13. Cellule de montage selon l'une quelconque des revendications 6 à 12, **caractérisée en ce qu'**un robot tactile (9, 10) présente un outil de préhension (11, 12) pilotable et adapté à plusieurs objets à saisir différents, en particulier une pièce (5), un palier (6), une bague de fixation (7), un magasin (33), un logement de presse (36) ou un outil de presse (38).

14. Cellule de montage selon l'une quelconque des revendications 6 à 13, **caractérisée en ce qu'**un outil de préhension (11, 12) présente une partie de base (16) avec des adaptateurs entraînés sur commande (17) et un dispositif de couplage (19) ainsi qu'un verrouillage (20) pouvant être commandé pour la réception interchangeable de doigts de préhension (13), dans laquelle le dispositif de montage (2, 3, 4) présente un dispositif de changement (18) pour des doigts de préhension (13) avec plusieurs supports (34) pour la réception en position précise de doigts de préhension détachés (13) et avec un dispositif d'actionnement (21) pour le verrouillage (20).

15. Cellule de montage selon l'une quelconque des revendications 6 à 14, **caractérisée en ce qu'**un robot tactile (9, 10) présente un ou plusieurs axe(s) de robot (I - VII) commandé(s) par force ou régulé(s) par force et des capteurs intégrés (51) détectant des charges actives.
